# EUROPEAN PATENT SPECIFICATION

(11) **EP 2 484 260 B1**
(45) Date of publication and mention of the grant of the patent: **06.05.2015**
(21) Application number: 12152887.1
(22) Date of filing: 27.01.2012
(51) Int. Cl.: A47L 9/24

(54) **Sealing gasket for a telescopic extension, in particular for a household appliance**
Dichtung für eine teleskopische Verlängerung, insbesondere für Haushaltsgeräte
Joint d'étanchéité pour extension télescopique, en particulier pour appareil domestique

(30) Priority: 07.02.2011 IT MI20110170
(43) Date of publication of application: 08.08.2012
(73) Proprietor: OMEC S.p.A., 21055 Gorla Minore (Varese) (IT)
(72) Inventor: Canale, Stefano, 21055 Gorla Minore (VA) (IT)
(74) Representative: Colombo, Stefano Paolo

(56) References cited:
- EP-A2- 2 277 427
- WO-A1-02/38026
- US-A- 5 031 266
- US-A1- 2008 284 158
- US-A1- 2010 123 305

## Description

The present invention relates generally to the sector of household appliances. More specifically, the present invention relates to a sealing gasket for a telescopic extension, in particular for a household appliance such as a vacuum cleaner or the like.

Telescopic extensions for household appliances are known, for example as disclosed in EP 1,092,383, EP 0,520,534 and EP 0,987,976 in the name of the present Applicant.

These telescopic extensions comprise an inner tube and an outer tube sealingly slidable one inside the other and a sealing gasket arranged between the inner tube and the outer tube.

EP 2 277 427 discloses a telescopic pipe having an outer pipe, an inner pipe with fixing grooves, inserted into the outer pipe; an holder pipe fixed to one side of the outer pipe, a handle pipe formed to surround the holder pipe, and a sealing member formed on an outer surface of the inner pipe to seal the space between the outer and inner pipes.

The inventor has noticed that the known sealing gaskets have a number of drawbacks.

In particular, the inventor has noted that the known sealing gaskets in a disadvantageous manner do not ensure a hermetic seal between the inner tube and the outer tube, namely do not ensure that the space between the inner tube and the outer tube is perfectly sealed. If the space between the inner tube and the outer tube is not perfectly sealed, during suction, part of the air being sucked in enters into this space. This incoming air has the effect of worsening the suction performance of the vacuum cleaner. In principle this poorer performance could be compensated for by increasing the suction power and therefore the electric power used by the vacuum cleaner. This increase is however undesirable since it is preferable that the electric power consumption of a household appliance should be as low as possible.

Therefore, the object of the present invention is to provide a sealing gasket for a telescopic extension of a household appliance, for example a vacuum cleaner, which is able to ensure an optimum hermetic seal between the inner tube and the outer tube of the telescopic extension.

According to embodiments of the present invention, this object is achieved by a sealing gasket which comprises a body having substantially the form of a cylinder, and a collar which comprises a first projecting lip and a second projecting lip and which is connected to one end of the body. The body has a longitudinal axis. The first projecting lip extends in the axial direction towards the outside of the body and in the radial direction towards the outside of the body, while the second projecting lip extends in the axial direction towards the inside of the body and in the radial direction towards the outside of the body.

In the continuation of the present description and the claims, the expression "axial direction" indicates a direction parallel to the longitudinal axis of the body, while the expression "radial direction" indicates a direction perpendicular to the longitudinal axis and to the external surface of the body.

According to a first aspect, the present invention provides a sealing gasket for a telescopic extension of a household appliance, the sealing gasket comprising:
- a body having substantially the form of a cylinder, the body comprising a depression projecting in the radial direction towards the inside of the body and extending in the axial direction substantially along the whole length of the body; and
- a collar comprising a first projecting lip and a second projecting lip, the collar being connected to one end of the body,
wherein the first projecting lip extends in the axial direction towards the outside of the body and in the radial direction towards the outside of the body,
the second projecting lip extends in the axial direction towards the inside of the body and in the radial direction towards the outside of the body so as to form a circumferential concavity together with the first projecting lip, and wherein
the body and the second projecting lip form an annular recess having a bottom.

Preferably, the first projecting lip and the second projecting lip have respective edges where the collar has a greater diameter than an internal diameter of the telescopic projection so that, when the sealing gasket is inserted into the telescopic extension, the edges of the first projecting lip and the second projecting lip rest against an internal surface of the telescopic extension along two sealing lines.

Preferably, the depression has a closed end with a rounded corner in the region of the collar.

Preferably, the body comprises at least one engaging recess configured to fix the sealing gasket to the telescopic extension.

According to advantageous embodiments, the body comprises two engaging recesses arranged in positions diametrically opposite each other.

Preferably, the sealing gasket is a single-piece body molded from a flexible plastic material.

According to a second aspect, the present invention provides a telescopic extension for a household appliance, the telescopic appliance comprising an inner tube and an outer tube, the inner tube having on its external surface an axial channel forming an axial projection radially projecting towards the inside of the inner tube, the telescopic extension further comprising a sealing gasket inserted inside the inner tube as illustrated above, so that the edge of the end of said inner tube touches the bottom of the annular recess.

The present invention will emerge more clearly from the following detailed description, provided by way of a non-limiting example, to be read with reference to the accompanying drawings in which:
- Figures 1 a and 1 b are perspective views of a sealing gasket according to a preferred embodiment of the present invention;
- Figure 2 is a top plan view of the sealing gasket according to Figures 1 a and 1 b;
- Figures 3a and 3b are cross-sectional views of the sealing gasket along the plane A-A and the plane B-B of Figure 2, respectively; and
- Figure 4 is a longitudinally sectioned view of a portion of a telescopic extension comprising the sealing gasket according to the present invention.

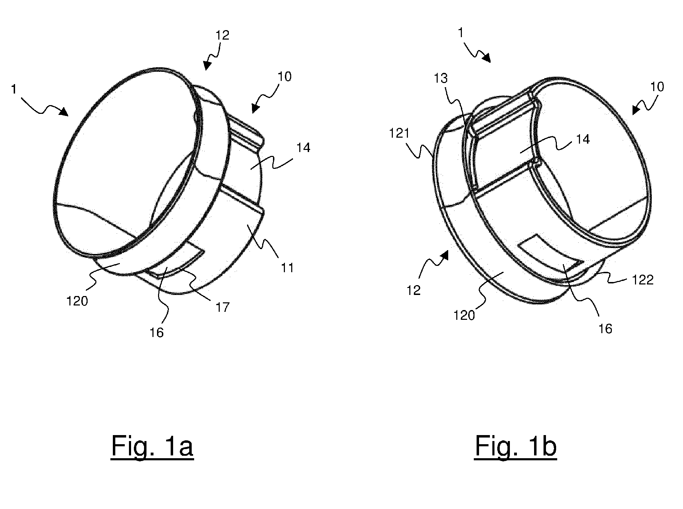

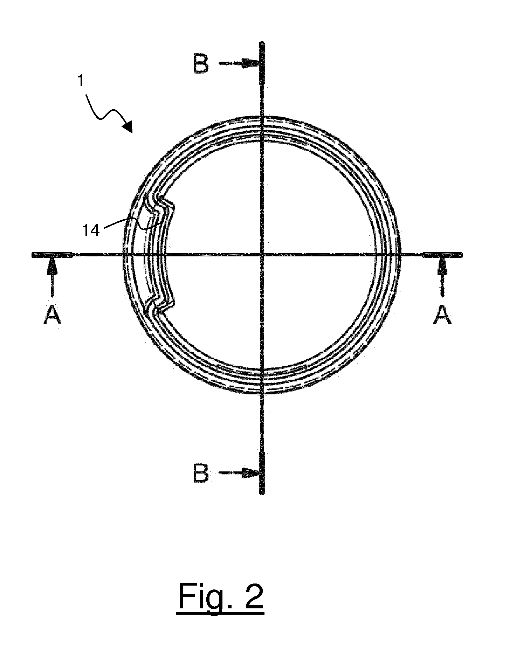

Figures 1a, 1b, 2, 3a and 3b show a sealing gasket 1 for a telescopic extension, according to a preferred embodiment of the present invention.

The sealing gasket 1 preferably has a mushroom-like shape. In particular, it preferably comprises a body 10 and a collar 12.

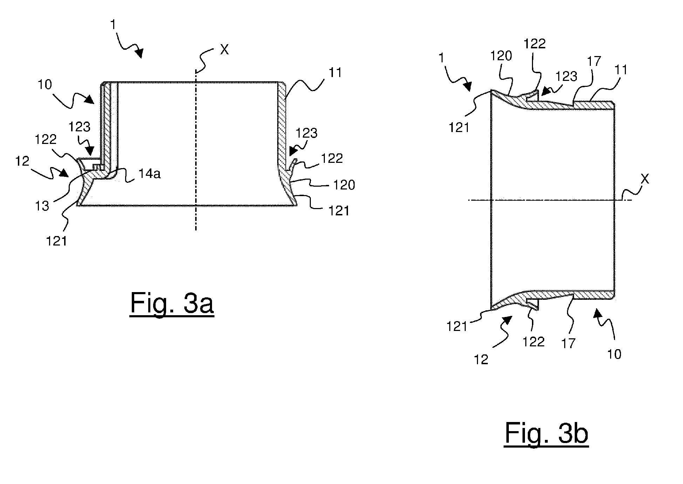

The body 10 has substantially the form of a hollow cylinder with an approximately circular cross-section. The longitudinal axis of the body 10 is shown in Figures 3a and 3b as the axis X.

The body 10 has a side wall 11 which defines a central cavity. The thickness of the side wall 11 is preferably substantially constant. The external cross-section of the body 10 has preferably a shape and dimensions corresponding to the shape and dimensions of the internal cross-section of the inner tube of a telescopic extension, so that the body 10 may be inserted inside the inner tube, as will be explained in greater detail hereinbelow.

For example, if the inner tube has a circular cross-section with a certain internal diameter, the side wall also has preferably a circular cross-section with an external diameter slightly smaller than the internal diameter of the inner tube. The sealing gasket 1 shown in the Figures has instead a cross-section shaped so as to form a depression 14 in a direction radially towards the inside. The depression 14 has a substantially parallelepiped shape. This shape makes the sealing gasket 1 suitable for insertion inside an inner tube which has a projection which projects radially towards its interior and which has a cross-section corresponding to that of the depression 14, as will be described in greater detail hereinbelow. The depression 14 extends preferably over the whole length of the body 10 and has a closed end 14a with a rounded corner in the region of the collar 12.

Moreover, preferably, the side wall 11 of the body 10 forms one or more engaging recesses which allow the gasket 1 to be fixed to the inner tube of a telescopic extension. For example, the gasket 1 shown in the Figures comprises two engaging recesses 16. The two engaging recesses 16 are preferably arranged in positions diametrically opposite each other, rotated by about 90° with respect to the position of the axial depression 14. The engaging recesses 16 may have a constant depth or a depth variable in the axial direction. In particular, the engaging recesses 16 shown in the figures have a depth which increases in a substantially linear manner between the edge of the engaging recess 16 close to the collar 12 and the opposite edge, so as to form an engaging tooth 17 along this opposite edge.

The collar 12 comprises a side wall 120 which has preferably a substantially constant thickness. The side wall 120 preferably has a concave profile which defines a first annular projecting lip 121 and a second annular projecting lip 122, these lips being arranged so as to form a V-shaped or U-shaped circumferential cavity.

The collar 12 is connected to one end of the body 10. In particular, the collar 12 is connected to one of the two edges of the side wall 11. The first projecting lip 121 extends in the axial direction towards the outside and in the radial direction towards the outside of the body 10 and thus extends the side wall 11 in the axial direction. The second projecting lip 122 extends in the axial direction towards the inside and in the radial direction towards the outside of the body 10, such that the side wall 11 and the second projecting lip 122 define an annular recess 123 which has a bottom 13.

Since both the lips 121 and 122 project in the radial direction towards the outside of the body 10, the collar 12 has, at least at the edges of the lips 121 and 122, a diameter greater than the external diameter of the body 10. This diameter is also slightly greater than the internal diameter of the cross-section of the outer tube of a telescopic extension, so that, when the outer tube is fitted onto the gasket, the internal surface of the outer tube rests against the edges of the lips 121 and 122, as will be described in greater detail hereinbelow.

Preferably, the sealing gasket 1 is a single-piece body made by means of molding from a flexible plastic material. The plastic material used for molding the sealing gasket 1 may be, for example, polyethylene, PEHD (high density polyethylene), polypropylene, nylon or a similar material.

The sealing gasket 1 is preferably suitable for use in a telescopic tube for a household appliance, for example a vacuum cleaner.

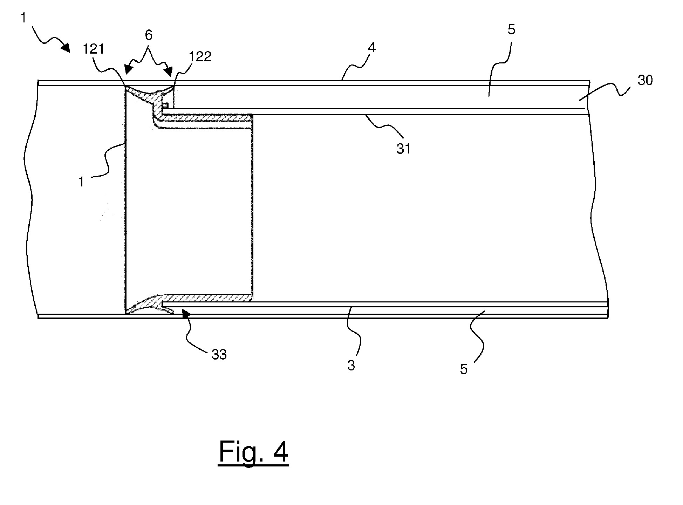

Figure 4 shows a telescopic extension 2 comprising the sealing gasket 1.

The telescopic extension 2 comprises an inner tube 3 and an outer tube 4 slidable one inside the other.

The inner tube 3 is substantially cylindrical and has on its external surface an axial channel 30 which forms a corresponding axial projection 31 which projects radially towards the inside of the inner tube 3. The channel 30 and the projection 31 have a substantially parallelepiped shape. The axial channel 30 may for example seat a fastening mechanism designed to prevent longitudinal sliding of the inner tube 3 with respect to the outer tube 4.

The internal cross-section of the inner tube 3 preferably has a shape and dimensions such as to allow the body 10 of the gasket 1 to be seated inside it. In particular, the internal diameter of the inner tube 3 is slightly greater than the external diameter of the body 10 and the projection 31 also preferably has a cross-section with a shape and dimensions corresponding to the shape and dimensions of the cross-section of the depression 14 of the sealing gasket 1.

Moreover, the inner tube 3 has, at one end 33 thereof, one or more punched zones (not shown in the figures) projecting towards the inside of the inner tube 3 and suitable for cooperating with the engaging recesses 16 so as to fix the gasket 1 to the inner tube 3. The number of punched zones and their arrangement along the perimeter of the internal wall of the inner tube 3 correspond to the number of engaging recesses 16 and their relative arrangement. In the extension 2 shown in Figure 4, therefore, the inner tube 3 comprises two punched zones arranged in positions rotated by about 90° with respect to the axial channel 30 and diametrically opposite each other.

The outer tube 4 preferably has a substantially cylindrical cross-section with an internal diameter slightly smaller than the external diameter of the sealing gasket 1 at the edges of the lips 121 and 122.

In order to assemble the telescopic extension 2 the body 10 of the sealing gasket 1 is inserted inside the inner tube 3 at one of its ends 33, coupling the axial projection of the inner tube 3 together with the depression 14 in the gasket 1. The gasket 1 is pushed into the end 33 until the edge of the end 33 engages with the recess 123 between the body 10 and the collar 12 and finally touches the bottom 13. When the edge of the end 33 is in contact with the bottom 13 of the recess 123, the engaging recesses 16 engage with the punched zones of the inner tube 3. The engaging teeth 17 advantageously prevent the sealing gasket 1 from coming out of the inner tube 3. Finally, the outer tube 4 is fitted onto the inner tube 3.

Once assembled, the telescopic extension 2 therefore has an interspace 5 between the inner tube 3 and the outer tube 4. The interspace 5 surrounds the inner tube 3 along its entire perimeter and has a widened portion in the region of the channel 30.

The interspace 5 is advantageously sealed by the collar 12 of the gasket 1. In particular, since the outer tube 4 has an internal diameter slightly smaller than the external diameter of the collar 12 at the edges of the lips 121 and 122, the edges of the lips 121 and 122 of the collar 12 rest against the internal surface of the side wall of the outer tube 4, thus creating two circumferential sealing lines 6 (see Figure 4).

At the edges of the lips 121, 122 the pressure exerted by the gasket 1 against the internal surface of the outer tube 4 is particularly high and thus ensures an optimum hermetic seal between the inner tube 3 and outer tube 4 along the two sealing lines 6.

Therefore, the sealing gasket 1 advantageously prevents, during suction, the air from entering into the interspace 5 present between the inner tube 3 and the outer tube 4. This ensures maximum suction efficiency and at the same time minimizes the power consumption of the household appliance (for example vacuum cleaner) which comprises the telescopic extension 2.

Moreover, the gasket 1 advantageously does not have any sharp edges on its internal surface. In particular, the gasket 1 does not have any sharp edges on the internal surface of the side wall 11 of the body 10 either at the joint between the body 10 and the collar 12 or at the closed end 14a of the depression 14.

Advantageously, the absence of sharp edges in the gasket 1 allows the air flow to flow freely inside the extension 2, without obstacles which may result in the formation of vortices which adversely affect the flow characteristics. With the gasket 1 according to the present invention it is therefore possible to improve the flow characteristics of the air inside the telescopic extension 2 and therefore improve further the suction efficiency of the household appliance (for example vacuum cleaner) which comprises the telescopic extension 2.

## Claims

1. A sealing gasket (1) for a telescopic extension (2) of a household appliance, said sealing gasket (1) comprising:
- a body (10) having substantially the form of a cylinder, and
- a collar (12) comprising a first projecting lip (121) and a second projecting lip (122), said collar (12) being connected to one end of said body (10),
wherein said first projecting lip (121) extends in the axial direction towards the outside of said body (10) and in the radial direction towards the outside of said body (10),
said second projecting lip (122) extends in the axial direction towards the inside of said body (10) and in the radial direction towards the outside of said body (10) so as to form a circumferential concavity together with the first projecting lip (121), and wherein said body (10) and said second projecting lip (122) form an annular recess (123) having a bottom (13),
**characterised in that** said body (10) comprises a depression (14) projecting in the radial direction towards the inside of said body (10) and extending in the axial direction substantially along the whole length of said body (10).

2. The sealing gasket (1) according to claim 1, wherein said first projecting lip (121) and said second projecting lip (122) have respective edges where said collar (12) has a greater diameter than an internal diameter of said telescopic extension (2) so that, when said sealing gasket (1) is inserted into said telescopic extension (2), said edges of said first projecting lip (121) and said second projecting lip (122) rest against an internal surface of said telescopic extension (2) along two sealing lines (6).

3. The sealing gasket (1) according to any one of the preceding claims, wherein said depression (14) has a closed end (14a) with a rounded corner in the region of said collar (12).

4. The sealing gasket (1) according to any one of the preceding claims, wherein said body (10) comprises at least one engaging recess (16) configured to fix said sealing gasket (1) to said telescopic extension (2).

5. The sealing gasket (1) according to claim 4, wherein said body (10) comprises two engaging recesses (16) arranged in positions diametrically opposite each other.

6. The sealing gasket (1) according to any one of the preceding claims, wherein said sealing gasket (1) is a single-piece body molded from a flexible plastic material.

7. A telescopic extension (2) for a household appliance, said telescopic extension (2) comprising an inner tube (3) and an outer tube (4), said inner tube (3) having on its external surface an axial channel (30) forming an axial projection (31) radially projecting towards the inside of the inner tube (3), said telescopic extension (2) further comprising a sealing gasket (1) according to any of the preceding claims inserted inside said inner tube (3), so that the edge of the end (33) of said inner tube touches the bottom (13) of the annular recess (123).

## Patentansprüche

1. Dichtungselement (1) für eine Teleskopverlängerung (2) eines Haushaltsgerätes, wobei das Dichtungselement (1) aufweist:
- einen Körper (10), welcher im Wesentlichen die Form eines Zylinders hat, und
- einen Kragen (12), welcher eine erste vorstehende Lippe (121) und eine zweite vorstehende Lippe (122) umfasst, wobei der Kragen (12) mit einem Ende des Körpers (10) verbunden ist,
wobei sich die erste vorstehende Lippe (121) in der axialen Richtung zur Außenseite des Körpers (10) und in der radialen Richtung zur Außenseite des Körpers (10) erstreckt,
die zweite vorstehende Lippe (122) sich in der axialen Richtung zum Innern des Körpers (10) und in der radialen Richtung zur Außenseite des Körpers (10) erstreckt, um so eine umlaufende Ausnehmung zusammen mit der ersten vorstehenden Lippe (121) zu bilden, und
wobei der Körper (10) und die zweite vorstehende Lippe (122) eine ringförmige Nut (123) mit einem Boden (13) bilden,
**dadurch gekennzeichnet,**
**dass** der Körper (10) eine Einsenkung (14) aufweist, welche in der radialen Richtung zum Innern des Körpers (10) ragt und sich in der axialen Richtung im Wesentlichen entlang der gesamten Länge des Körpers (10) erstreckt.

2. Dichtungselement (1) nach Anspruch 1,
wobei die erste vorstehend Lippe (121) und die zweite vorstehende Lippe (122) entsprechende Kanten aufweisen, an welchen der Kragen (12) einen größeren Durchmesser hat als ein Innendurchmesser der Teleskopverlängerung (2), so dass, wenn das Dichtungselement (1) in die Teleskopverlängerung (2) eingesetzt ist, die Kanten der ersten vorstehenden Lippe (121) und der zweiten vorstehenden Lippe (122) entlang von zwei Dichtlinien (6) an einer Innenfläche der Teleskopverlängerung (2) anliegen.

3. Dichtungselement (1) nach einem der vorhergehenden Ansprüche,
wobei die Einsenkung (14) ein geschlossenes Ende (14a) mit einer gerundeten Ecke in dem Bereich des Kragens (12) aufweist.

4. Dichtungselement (1) nach einem der vorhergehenden Ansprüche,
wobei der Körper (10) wenigstens eine Betätigungsausnehmung (16) aufweist, welche zum Befestigen des Dichtungselementes (1) an der Teleskopverlängerung (2) ausgebildet ist.

5. Dichtungselement (1) nach Anspruch 4,
wobei der Körper (10) zwei Betätigungsausnehmungen (16) aufweist, welche an diametral gegenüberliegenden Positionen zueinander angeordnet sind.

6. Dichtungselement (1) nach einem der vorhergehenden Ansprüche,
wobei das Dichtungselement (1) einstückig aus einem flexiblen Kunststoffmaterial geformt ist.

7. Teleskopverlängerung (2) für ein Haushaltsgerät,
wobei die Teleskopverlängerung (2) ein Innenrohr (3) und ein Außenrohr (4) aufweist, wobei das Innenrohr (3) an seiner Außenfläche einen axialen Kanal (30) aufweist, welcher einen axialen Vorsprung (31) bildet, welcher radial zum Innern des Innenrohres (3) vorsteht, wobei die Teleskopverlängerung (2) weiter ein Dichtungselement (1) nach einem der vorhergehenden Ansprüche aufweist und welches in das Innenrohr (3) eingesetzt ist, so dass die Kante des Endes (33) des Innenrohres den Boden (13) der ringförmigen Nut (123) berührt.

## Revendications

1. Joint d'étanchéité (1) pour une extension télescopique (2) d'un appareil électroménager, ledit joint d'étanchéité (1) comprenant :
un corps (10) ayant sensiblement la forme d'un cylindre, et
un collier (12) comprenant une première lèvre en saillie (121) et une seconde lèvre en saillie (122), ledit collier (12) étant raccordé à une extrémité dudit corps (10),
dans lequel ladite première lèvre en saillie (121) s'étend dans la direction axiale vers l'extérieur dudit corps (10) et dans la direction radiale vers l'extérieur dudit corps (10),
ladite seconde lèvre en saillie (122) s'étend dans la direction axiale vers l'intérieur dudit corps (10) et dans la direction radiale vers l'extérieur dudit corps (10) afin de former une concavité circonférentielle conjointement avec la première lèvre en saillie (121), et dans lequel ledit corps (10) et ladite seconde lèvre en saillie (122) forment un évidement annulaire (123) ayant un fond (13),
**caractérisé en ce que** ledit corps (10) comprend une dépression (14) faisant saillie dans la direction radiale vers l'intérieur dudit corps (10) et s'étendant dans la direction axiale sensiblement le long de toute la longueur dudit corps (10).

2. Joint d'étanchéité (1) selon la revendication 1, dans lequel ladite première lèvre en saillie (121) et ladite seconde lèvre en saillie (122) ont des bords respectifs où ledit collier (12) a un plus grand diamètre qu'un diamètre interne de ladite extension télescopique (2) de sorte que lorsque ledit joint d'étanchéité (1) est inséré dans ladite extension télescopique (2), lesdits bords de ladite première lèvre en saillie (121) et de ladite seconde lèvre en saillie (122) s'appuient contre une surface interne de ladite extension télescopique (2) le long de deux lignes d'étanchéité (6).

3. Joint d'étanchéité (1) selon l'une quelconque des revendications précédentes, dans lequel ladite dépression (14) a une extrémité fermée (14a) avec un coin arrondi dans la région dudit collier (12).

4. Joint d'étanchéité (1) selon l'une quelconque des revendications précédentes, dans lequel ledit corps (10) comprend au moins un évidement de mise en prise (16) configuré pour fixer ledit joint d'étanchéité (1) sur ladite extension télescopique (2).

5. Joint d'étanchéité (1) selon la revendication 4, dans lequel ledit corps (10) comprend deux évidements de mise en prise (16) agencés dans des positions diamétralement opposées entre eux.

6. Joint d'étanchéité (1) selon l'une quelconque des revendications précédentes, dans lequel ledit joint d'étanchéité (1) est un corps d'un seul tenant moulé à partir d'une matière plastique souple.

7. Extension télescopique (2) pour un appareil électroménager, ladite extension télescopique (2) comprenant un tube interne (3) et un tube externe (4), ledit tube interne (3) ayant sur sa surface externe, un canal axial (30) formant une saillie axiale (31) faisant saillie radialement vers l'intérieur du tube interne (3), ladite extension télescopique (2) comprenant en outre un joint d'étanchéité (1) selon l'une quelconque des revendications précédentes, inséré à l'intérieur dudit tube interne (3), de sorte que le bord de l'extrémité (33) dudit tube interne touche le fond (13) de l'évidement annulaire (123).
